(19) Europäisches Patentamt
European Patent Office
Office européen des brevets

(11) Veröffentlichungsnummer: **0 303 829 B1**

(12) **EUROPÄISCHE PATENTSCHRIFT**

(45) Veröffentlichungstag der Patentschrift:
11.09.91 Patentblatt 91/37

(51) Int. Cl.⁵: **B60C 23/06**

(21) Anmeldenummer: **88111278.3**

(22) Anmeldetag: **14.07.88**

(54) Warneinrichtung für ein luftbereiftes Rad eines Fahrzeugs.

(30) Priorität: **21.08.87 DE 3727875**

(43) Veröffentlichungstag der Anmeldung:
**22.02.89 Patentblatt 89/08**

(45) Bekanntmachung des Hinweises auf die
Patenterteilung:
**11.09.91 Patentblatt 91/37**

(84) Benannte Vertragsstaaten:
**DE ES FR GB IT SE**

(56) Entgegenhaltungen:
**DE-A- 3 503 805
DE-C- 447 195
DE-C- 2 813 058
US-A- 3 588 813**

(73) Patentinhaber: **WABCO Westinghouse
Fahrzeugbremsen GmbH
Am Lindener Hafen 21 Postfach 91 12 80
W-3000 Hannover 91 (DE)**

(72) Erfinder: **Reinecke, Erich, Dipl.-Ing.
Kastanieneck 6
W-3167 Burgdorf (DE)**

(74) Vertreter: **Schrödter, Manfred
WABCO Westinghouse Fahrzeugbremsen
GmbH Am Lindener Hafen 21 Postfach 91 12
80
W-3000 Hannover 91 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Warneinrichtung gemäß dem Oberbegriff des Patentanspruchs 1.

Eine derartige Einrichtung zur Erkennung eines Druckverlustes ist durch die DE-PS 2813058 vorbekannt. Die vorbekannte Einrichtung ist mit dem Reifendruck beaufschlagbar und signalisiert das Unterschreiten eines vorgegebenen Luftdruckes im Reifen. Der Meßbereich ist durch eine obere und eine untere Druckhöhe begrenzt. Bei Unterschreiten der unteren Druckhöhe ist diese Einrichtung unwirksam.

Es besteht das Bedürfnis, einen unterhalb des erwähnten Meßbereichs liegenden Reifendruck, bzw. den drucklosen Zustand des Reifens, anzuzeigen. Dies trifft insbesondere zu für Fahrzeugräder deren Reifen — Felgen — Systeme Notlaufeigenschaften besitzen, derart, daß mit einem völlig abgeplatteten Reifen noch eine relativ lange Wegstrecke zurückgelegt werden kann.

Bei den vorerwähnten Reifen — Felgen — Systemen ist das Felgenbett so ausgebildet, daß es der mit der Fahrbahn in Kontakt stehenden abgeplatteten Lauffläche des Reifens als Stützfläche dienen kann. In vorwiegend unkritischen Fahrsituationen ist jedoch ein solchermaßen bedingt fahrtüchtiger Reifenzustand ohne den Einsatz speziell hierfür geeigneter Druckverlust — Überwachungseinrichtungen nicht mit der erforderlichen Sicherheit vom Fahrer erkennbar.

Mit der DE-C-447195, die den Oberbegriff des Anspruchs 1 entspricht, ist eine Vorrichtung zum Anzeigen von Luftmangel in Druckluftreifen bekannt, mit der auch der drucklose Zustand des Reifens anzeigbar ist.

Eine in den Reifen hineinragende elektrische Kontaktstange ist bei Luftmangel durch den sich abplattenden Reifen verschieblich, derart, daß mit ihr durch Verbindung elektrischer Kontakte ein Stromkreis zur Erregung eines mit dem Rad umlaufenden Elektromagneten geschlossen werden kann.

Das Magnetfeld des Elektromagneten ist signalgebend auf einen gegenüber dem Rad feststehenden Relaisanker übertragbar. Für die elektrische Versorgung des rotierenden Elektromagneten wird für jedes mit der Anzeigevorrichtung versehene Rad auch eine mit dem Rad umlaufende Batterie benötigt. Bei dieser Vorrichtung wird die Zuverlässigkeit der Anzeige auf den Ladezustand der Batterie eines jeden Rades verlagert.

Der Erfindung liegt deshalb die Aufgabe zugrunde, eine Einrichtung zu schaffen, die einen Abfall des Reifendruckes bzw. den drucklosen Zustand des Reifens während der Fahrt anzeigt.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß eine Anpassung der Einrichtung an reifenspezifische Luftdrücke unterschiedlicher Fabrikate, oder spezieller Betriebszustände, nicht erforderlich ist.

Die Erfindung hat weiterhin den Vorteil, daß eine Abplattung der Lauffläche des Reifens infolge einer Zuladung bei nicht angemessenem Reifendruck von der Auswerteeinrichtung erkannt wird.

Ein weiterer Vorteil der Erfindung ergibt sich aus dem einfachen und wenig störanfälligen Aufbau der Einrichtung.

Die Erfindung wird anhand eines Ausführungsbeispiels, das in der Zeichnung dargestellt ist, näher erläutert. Es zeigen :

**Fig. 1** ein Fahrzeugrad mit einer Einrichtung zum Überwachen des Reifendruckes ;
**Fig. 2** eine Meßeinrichtung gemäß Fig. 1 ;
**Fig. 3** eine Meßeinrichtung gemäß Fig. 2 mit einer Betätigungshilfseinrichtung.

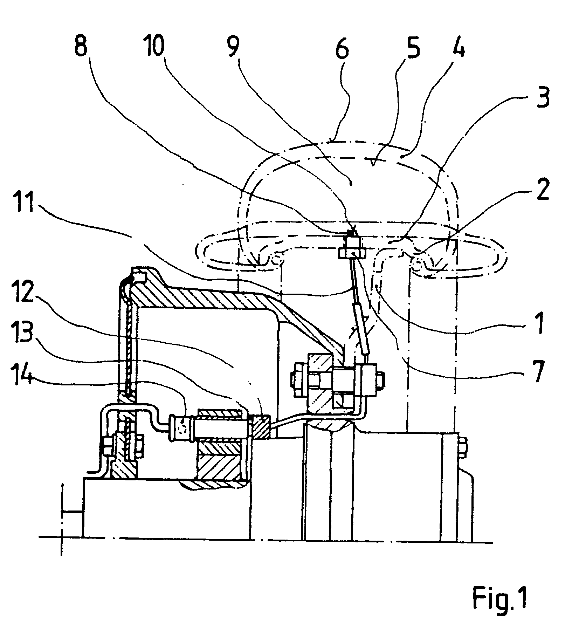

Die Fig. 1 zeigt ein Fahrzeugrad mit einer Radschüssel (1) und einer Felge (2), deren Felgenbett (3) als umlaufende Stützfläche für den Reifen (4) im abgeplatteten Zustand ausgebildet ist. Bei drucklosem, oder nahezu drucklosem Reifen (4) stützt sich die Innenfläche (5) der mit der Fahrbahn in Kontakt befindlichen Lauffläche (6) des Reifens (4) auf das Felgenbett (3) ab. Das dargestellte Reifen — Felgen — System besitzt eine Notlaufeigenschaft, derart, daß der auf dem Felgenbett (3) abgestützte Teil des Reifens gewissermaßen als "Vollgummireifen" weiterlaufen kann.

An der Felge (2), oder an der Radschüssel (1) ist eine Meßeinrichtung (7) angeordnet, die ein das Felgenbett (3) oder die Felge (2) in der Nähe des Felgenbettes (3) durchdringendes und in den Innenraum (9) des Reifens (4) hineinragendes Tastelement (8) in Form eines Stößels (8) aufweist. Das in den Innenraum (9) hineinragende Ende (10) des Stößels (8) ist gegen die Innenfläche (5) gerichtet. Der Stößel (8) ist durch die Berührung mit der dem Felgenbett (3) sich nähernden, bzw. der auf dem Felgenbett (3) sich abstützenden Innenfläche (5) von einer vorgegebenen Ausgangsstellung in seiner Längsrichtung radial bezüglich des Felgenbettes (3) radeinwärts gegen eine Rückstellkraft verstellbar.

Durch die Verstellung des Stößels (8) wird als Ausgangssignal der Meßeinrichtung (7) ein Stellweg erzeugt, der der Verstellung des Stößels (8) entspricht. Der Stellweg wird über einen mit dem Stößel (8) in Wirkverbindung stehenden Übertragungsmechanismus (11) auf eine mit dem Fahrzeugrad umlaufende Stelleinrichtung

2

(12) übertragen. Die Stelleinrichtung (12) weist ein Stellglied (13) auf, das durch das Ausgangssignal der Meßeinrichtung (7) über den Übertragungsmechanismus (11) verstellbar ist.

Es ist denkbar, die Meßeinrichtung (7) mit einer Übersetzungseinrichtung zu versehen, mit der der erzeugte Stellweg im Sinne einer Erweiterung des Meßbereichs verändert werden kann.

Die Stellung des Stellgliedes (13) wird durch einen achsfest angeordneten Sensor (14) berührungslos abgetastet und an eine Auswerte- und Anzeigeeinrichtung im Sinne der eingangs erwähnten DE-PS 2813058 weiter geleitet.

Die Stelleinrichtung (12) und die Meßeinrichtung (7) sind zueinander am Fahrzeugrad so angeordnet, daß das Stellglied (13) den Abtastbereich des Sensors (14) durchfährt, wenn der Stößel (8) durch Abplattung des Reifens (4) betätigbar ist.

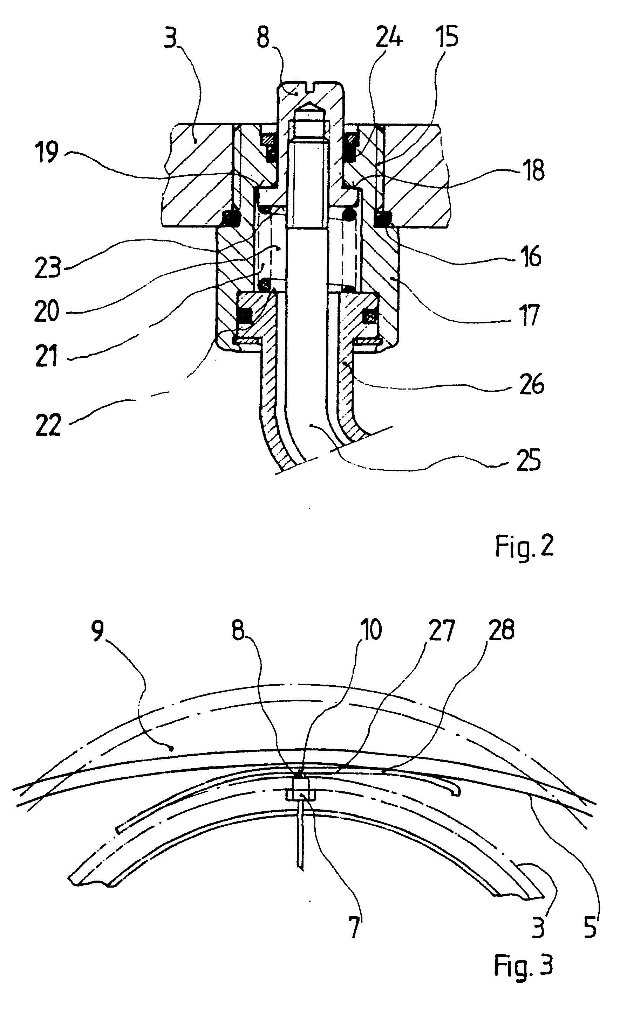

Die Fig. 2 zeigt ein Ausführungsbeispiel der Meßeinrichtung (7), deren Gehäuse (17) durch eine Schraubverbindung (15) und eine Dichtung (16) mit dem Felgenbett (3) verbunden ist. Die Stellung des Stößels (8) relativ zum Felgenbett (3) ist durch einen Anschlag (18) des Gehäuses (17) und durch eine Stützfläche (19) des Stößels (8) vorgegeben. Der Anschlag (18) kann auch einstellbar ausgeführt sein, so daß die Stellung des Stößels (8) relativ zum Felgenbett (3) veränderbar ist. So kann z.B. durch eine Vergrößerung der Eindringtiefe des Stößels (8) in den Innenraum (9) die Messung bereits vor einer drastischen Abplattung des Reifens (4) beginnen.

In einer Kammer (20) des Gehäuses (17) ist eine Feder (21) angeordnet, die sich einerseits auf einer bezüglich des Gehäuses (17) ortsfesten Auflagefläche (22) und andererseits auf einer Stirnfläche (23) des Stößels (8) abstützt. Hierdurch ist der Stößel (8) in seiner unbetätigten Stellung gegen den Anschlag (18) vorgespannt. Die Kammer (20) ist gegenüber dem Innenraum (9) des Reifens (4) durch eine Dichtung (24) abgedichtet.

Der Übertragungsmechanismus (11) ist durch ein mit dem Stößel (8) verbundenes flexibles Gestänge (25) und einer Umhüllung (26) des flexiblen Gestänges (25) gebildet. Der Übertragungsmechanismus (11) kann mit üblichen Befestigungsmitteln, wie z.B. Schellen, an der Radschüssel (1) befestigt sein. Es ist aber auch denkbar, die Radschüssel (1) mit einem Hohlraum oder einer Ausnehmung zu versehen, in dem der Übertragungsmechanismus (11) ganz oder teilweise untergebracht wäre. Schließlich könnte der besagte Hohlraum oder diese Ausnehmung durch eine entsprechende Anordnung und Gestaltung dazu dienen einer durch die Meßeinrichtung (7) hervorgerufenen Unwucht des Fahrzeugrades entgegenzuwirken.

Die Fig. 3 zeigt die Meßeinrichtung (7) mit einer Betätigungshilfsvorrichtung (27) in Form einer Blattfeder (27) die mit dem Felgenbett (3) einseitig fest verbunden ist. Das freie Ende (28) der Blattfeder (27) ist zwischen dem Stößel (8) und der Innenfläche (5) angeordnet, derart, daß bei einer Beaufschlagung des feien Endes (28) durch die Innenfläche (5) der Stößel (8) betätigbar ist. Durch eine entsprechende Einstellung des Stößels (8), sowie einer entsprechenden Formgestaltung der Blattfeder (27) ist dann der Meßbereich variierbar.

Bei erweitertem Meßbereich, sei es durch den Einsatz der Betätigungshilfsvorrichtung (27) oder durch die vorerwähnte Vergrößerung der Eindringtiefe des Stößels (8) in den Innenraum (9) des Reifens (4) ist der Beginn bzw. das Vorhandensein des Notlaufzustandes, in dem der auf dem Felgenbett abgestützte Reifen gewissermaßen als "Vollgummireifen" weiterläuft, nicht gesondert anzeigbar.

Die Meßeinrichtung (7) kann auch in der Art einer kompressiblen Kammer ausgebildet sein, die durch eine Annäherung der Innenfläche (5) des Reifens (4) an das Felgenbett (3) betätigbar ist, wobei durch eine Veränderung des Kammerdruckes ein auf den Verstellmechanismus (11) wirkendes Ausgangssignal erzeugbar ist.

Schließlich kann die Meßeinrichtung (7) auch als Sensor, z.B. in der Art einer Tauchspule oder einer Näherungsschaltung, ausgebildet sein, der durch eine Annäherung der Innenfläche (5) des Reifens (4) an das Felgenbett (3) erregbar ist, wobei ein dadurch erzeugbares elektrisches Ausgangssignal zur Verstellung der Verstellmechanismus nutzbar ist.

## Patentansprüche

1. Warneinrichtung für ein luftbereiftes Rad eines Fahrzeuges mit folgenden Merkmalen :

a)      Es ist eine Meßeinrichtung (7) vorgesehen, die beim Vorliegen eines dem jeweiligen Betriebszustand nicht angemessenen Reifendruckes ein Ausgangssignal abgibt ;

b)      die Meßeinrichtung (7) ist an der Felge (2) oder an der Radschüssel (1) eines Fahrzeugrades angeordnet und mit dem Innenraum (9) des Reifens verbunden ;

c)      es ist eine mit dem Fahrzeugrad umlaufende Stelleinrichtung (12) vorgesehen, die ein Stellglied (13) aufweist, das durch das Ausgangssignal der Meßeinrichtung (7) verstellbar ist ;

d)      es ist ein bezüglich der Stelleinrichtung (12) ortsfest am Fahrzeug angeordneter Sensor (14) vorgese-

EP 0 303 829 B1

hen, der zum berührungslosen Abtasten der Stellung des Stellgliedes (13) der Stelleinrichtung (12) dient;

e) es ist eine Auswerte- und/oder Anzeigeeinrichtung vorgesehen, die durch Signale des Sensors (14) ansteuerbar ist;

f) die Meßeinrichtung (7) weist ein das Felgenbett (3) der Felge (2) durchdringendes Tastelement (8) auf, dessen Ende (10) in den Innenraum (9) des Reifens (4) hineinragt;

g) das Tastelement (8) ist so angeordnet, daß es durch Annäherung der Innenfläche (5) des Reifens (4) an das Felgenbett (3) verstellbar ist;

h) das Ausgangssignal der Meßeinrichtung (7) ist durch die Verstellung des Tastelementes (8) erzeugbar;

i) das Ausgangssignal der Meßeinrichtung (7) entspricht einem durch die Verstellung des Tastelementes (8) erzeugbaren Stellweg, der auf einen mit dem Tastelement (8) in Wirkverbindung stehenden Übertragungsmechanismus (11) übertragbar ist;

j) das Tastelement (8) ist durch einen in der Meßeinrichtung (7) verschieblichen Stößel (8) gebildet, <u>gekennzeichnet durch folgendes Merkmal :</u>

k) der Übertragungsmechanismus (11) weist ein flexibles Gestänge (25) auf, welches mit dem Stößel (8) verbunden ist.

2. Einrichtung nach Anspruch 1, <u>dadurch gekennzeichnet,</u> daß die Ausgangsstellung des Stößels (8) relativ zum Felgenbett (3) durch einen bezüglich des Felgenbettes (3) ortsfesten Anschlag (18) und einer dem Anschlag (18) entgegengerichteten Stützfläche (19) des Stößels (8) bestimmt ist.

3. Einrichtung nach Anspruch 2, <u>dadurch gekennzeichnet,</u> daß der Anschlag (18) bezüglich des Felgenbettes (3) radial verstellbar ist.

4. Einrichtung nach Anspruch 1, <u>dadurch gekennzeichnet,</u> daß eine im Innenraum (9) des Reifens (4) zwischen der Innenfläche (5) des Reifens (4) und dem Ende (10) des Tastelementes (8) angeordnete Betätigungshilfsvorrichtung (27) vorgesehen ist, durch die durch Annäherung der Innenfläche (5) an das Felgenbett (3) das Tastelement (8) verstellbar ist.

5. Einrichtung nach Anspruch 4, <u>dadurch gekennzeichnet,</u> daß die Betätigungshilfsvorrichtung (27) durch eine einseitig am Felgenbett (3) befestigte Blattfeder (27) gebildet ist, deren freies Ende (28) zwischen dem Ende (10) des Tastelementes (8) und der Innenfläche (5) des Reifens (4) angeordnet und an der Innenfläche (5) abstützbar ist.

6. Einrichtung nach Anspruch 1, <u>gekennzeichnet durch folgende Merkmale :</u>

a) Das Stellglied (13) der Stelleinrichtung (12) ist in einem an sich bekannten mit dem Fahrzeugrad umlaufenden Zahnkranz angeordnet;

b) das Stellglied (13) ist von einer Grundstellung ausgehend relativ zu einem dem Stellglied (13) benachbarten Bereich des Zahnkranzes auf den Sensor zu verstellbar.

## Claims

1. A warning device for a pneumatically tyred wheel of a vehicle with the following features :

a) a measuring device (7) that delivers an output signal in the presence of a tyre pressure inappropriate for the particular operating state is provided;

b) the measuring device (7) is arranged at the rim (2) or at the wheel disc (1) of a vehicle wheel and is connected to the interior (9) of the tyre;

c) an actuator (12) rotating with the vehicle wheel is provided, which has a final control element (13) movable by the output signal of the measuring device (7);

d) a sensor (14) arranged fixedly on the vehicle in relation to the actuator (12) is provided, which serves for the non-contact sensing of the position of the final control element (13) of the actuator (12);

e) an evaluating and/or indicating device which is controllable by signals of the sensor (14) is provided;

f) the measuring device (7) has a sensor element (8) penetrating the rim base (3) of the rim (2), the end (10) of which sensor element projects into the interior (9) of the tyre (4);

g) the sensor element (8) is arranged so that it is movable by the inner surface (5) of the tyre (4) approaching the rim base (3);

h) the output signal of the measuring device (7) can be generated by the movement of the sensor element (8);

i) the output signal of the measuring device (7) corresponds to a displacement that can be generated by

4

the movement of the sensor element (8), which displacement can be transferred to a transfer mechanism (11) in operative connection with the sensor element (8) ;

j) the sensor element (8) is formed by a slide rod (8) displaceable in the measuring device (7) ; characterized by the following feature :

k) the transfer mechanism (11) has a flexible linkage (25) which is connected to the slide rod (8).

2. A device according to claim 1, characterized in that the starting position of the slide rod (8) relative to the rim base (3) is determined by a stop (18) that is fixed in relation to the rim base (3) and by a bearing face (19) of the slide rod (8) opposing the stop (18).

3. A device according to claim 2, characterized in that the stop (18) is radially movable in relation to the rim base (3).

4. A device according to claim 1, characterized in that a means for aiding actuation (27) arranged in the interior (9) of the tyre (4) between the inner face (5) of the tyre (4) and the end (10) of the sensor element (8) is provided, by which the sensor element (8) is movable as a result of the inner face (5) approaching the rim base (3).

5. A device according to claim 4, characterized in that the means aiding actuation (27) is constituted by a leaf spring (27) secured at one end to the rim base (3), the free end (28) of which is arranged between the end (10) of the sensor element (8) and the inner face (5) of the tyre (4) and is arranged to bear on the inner face (5).

6. A device according to claim 1, characterized by the following features :

a) the final control element (13) of the actuator (12) is arranged in a toothed ring known per se rotating with the vehicle wheel ;

b) starting from a basic position the final control element (13) is movable towards the sensor relative to a region of the toothed ring adjacent the final control element (13).

**Revendications**

1. Dispositif avertisseur pour roue à bandage pneumatique d'un véhicule, présentant les traits suivants :

a) il est prévu un dispositif de mesure (7) qui, en présence d'une pression du pneumatique non adéquate pour l'état de fonctionnement considéré, fournit un signal de sortie ;

b) le dispositif de mesure (7) est monté sur la jante (2) ou sur le disque de jante (1) d'une roue de véhicule à moteur et est relié à l'intérieur (9) du pneumatique ;

c) il est prévu un servomécanisme (12) solidaire de la roue du véhicule qui possède un organe (13) qui est déplacé par le signal de sortie du dispositif de mesure (7) ;

d) il est prévu un capteur (14), solidaire du véhicule et donc fixe par rapport au servomécanisme (12) servant à détecter sans contact la position de l'organe (13) du servomécanisme (12) ;

e) il est prévu un dispositif d'analyse et/ou d'affichage qui peut être commandé par des signaux du capteur (14) ;

f) le dispositif de mesure (7) possède un élément sensible (8) traversant la base (3) de la jante (2), son extrémité (10) saillant à l'intérieur (9) du pneumatique (4) ;

g) l'élément sensible (8) est disposé de manière à pouvoir être déplacé par le rapprochement de la surface interne (5) du pneumatique (4) par rapport à la base de la jante 3) ;

h) le signal de sortie du dispositif de mesure (7) peut être généré par le déplacement de l'élément sensible (8) ;

i) le signal de sortie du dispositif de mesure (7) correspond à une course pouvant être générée par le déplacement de l'élément sensible (8) et pouvant être transmise à un mécanisme de transmission (11) interagissant avec l'élément sensible (8) ;

j) l'élément sensible (8) est formé par un coulisseau (8) pouvant se déplacer dans le dispositif de mesure (7), caractérisé en ce que

k) le mécanisme de transmission (11) présente une tringlerie flexible (25) qui est reliée au coulisseau (8).

2. Dispositif selon la revendication 1, caractérisé en ce que la position de départ du coulisseau (8) relativement à la base de la jante (3) est déterminée par une butée (18) solidaire de la base de la jante (3) et une surface d'appui (19) du coulisseau (8) opposée à la bute (18).

3. Dispositif selon la revendication 2, caractérisé en ce que la bute (18) peut être réglée radialement par rapport à la base de la jante (3).

4. Dispositif selon la revendication 1, caractérisé en ce qu'il est prévu à l'intérieur (9) du pneumatique (4) un dispositif auxiliaire d'actionnement (27) disposé entre la surface intérieure (5) du pneumatique (4) et l'extrémité (10) de l'élément sensible (8) et permettant au rapprochement de la surface intérieure (5) de la base de la jante (3) de déplacer l'élément sensible (8).

5. Dispositif selon la revendication 4, caractérisé en ce que le dispositif auxiliaire d'actionnement (27) est formé par une lame de ressort (27) qui est fixée unilatéralement sur la base de la jante (3) et dont l'extrémité libre (28) est placée entre l'extrémité (10) de l'élément sensible (8) et la surface intérieure (5) du pneumatique (4) et peut reposer contre ladite surface intérieure (5).

6. Dispositif selon la revendication 1, caractérisé en ce que

a)  l'organe (13) du servomécanisme (12) est disposé dans une couronne dentée solidaire de la roue du véhicule et connue en soi, et en ce que

b)  l'organe (13) peut être déplacé vers le capteur, à partir d'une position de base, vers une partie de la couronne dentée voisine de l'organe (13).

Fig.1

Fig. 2

Fig. 3